# EUROPÄISCHE PATENTSCHRIFT

(11) **EP 0 793 580 B1**
(45) Veröffentlichungstag und Bekanntmachung des Hinweises auf die Patenterteilung: **19.08.1998**
(21) Anmeldenummer: 95933409.5
(22) Anmeldetag: 21.09.1995
(51) Int. Cl.: B60H 1/00

(54) **FAHRZEUGHEIZUNG**
VEHICLE HEATER
CHAUFFAGE DE VEHICULE

(30) Priorität: 21.11.1994 DE 4441352
(43) Veröffentlichungstag der Anmeldung: 10.09.1997
(73) Patentinhaber: Bayerische Motoren Werke Aktiengesellschaft, 80788 München (DE)
(72) Erfinder: BEDNAREK, Henryk, D-86899 Landsberg/Lech (DE); BLÜHER, Peter, D-82041 Oberhaching (DE); WAGNER, Berthold, D-82256 Fürstenfeldbruck (DE); KAZENWADEL, Horst, D-80639 München (DE)
(86) Internationale Anmeldenummer: EP9503711
(87) Internationale Veröffentlichungsnummer: WO9615920

(56) Entgegenhaltungen:
- EP-A- 0 214 517
- EP-A- 0 340 621
- DE-A- 3 206 239
- FR-A- 2 593 122
- AUTOMOTIVE ENGINEERING, Bd. 100, Nr. 2, Februar 1992 WARRENDALE, USA, Seiten 58-61, XP 000261806 'LATENT HEAT STORAGE'
- DATABASE WPI Section PQ, Week 9038 Derwent Publications Ltd., London, GB; Class Q12, AN 90-288825 & SU,A,1 546 295 (AZOV-CHERN AGRC MEC) , 28.Februar 1990

## Beschreibung

Die Erfindung bezieht sich auf eine Vorrichtung der im Oberbegriff des ersten Anspruchs angegebenen Art.

Aus der EP-B 0 340 621 ist eine Brennkraftmaschine mit einem Heizungskreislauf bekannt, in den ein Latentwärmespeicher über entsprechende Schaltventile zuschaltbar ist. Der Latentwärmespeicher ist mit einem Salz als Speichermedium gefüllt, das bei einem Phasenwechsel von fest nach flüssig in der Lage ist, Wärme über mehrere Tage zu speichern, wenn das Latentwärmespeichergehäuse entsprechend isoliert ausgeführt wird.

Die aus der EP-B 0 340 621 bekannte Anordnung dient dazu, den Fahrgastinnenraum motorunabhängig aufzuwärmen, also gleichsam als Ersatz für die bekannten mit Brennstoff betriebenen Standheizung.

Um eine entsprechende Wärmemenge speichern zu können, die ausreicht, eine Fahrgastzelle eines Kraftfahrzeuges auch bei Außentemperaturen von -20 °C soweit aufzuheizen, daß zumindest die Frontscheibe frei von Beschlag ist, ist ein Speichervolumen von über 10 l notwendig. Dementsprechend großbauend muß der Latentwärmespeicher ausgeführt werden.

Aus Automotive Engineering, Februar 1992, Seiten 58 - 61, ist es bekannt, einen Latentwärmespeicher mit einem zylindrischen Gehäuse zu versehen und diesen im Motorraum einzubauen.

Dieser Einbauort ist im Crashfall nachteilig, da gerade der Vorderwagen bei Kraftfahrzeugen zum Zwecke der Energieaufnahme relativ weich ausgelegt wird. Darüber hinaus steht in Motorräumen aufgrund der Vielzahl der Einbauaggregate in den seltensten Fällen ausreichend Platz zur Verfügung.

Aus der DE-A 32 04 519 ist es bekannt, einen Unterdruckvorratsbehälter in einem Kraftfahrzeug im Fußraumbereich des Beifahrers unterzubringen und zwar derart, daß er als Fußstütze dienen kann. Über die Befestigung und die Leitungsführung ist nichts gesagt. Im Crashfall ist ein Leckwerden des Unterdruckvorratsbehälters oder der Unterdruckleitung nicht problematisch, da aus beiden keinerlei Medium in den Fußraum ausströmen kann, das im Fuß-/Beinbereich des Beifahrers zu Verletzungen führen kann.

Aufgabe der Erfindung ist es, neben einem geeigneten Einbauort für einen Latentwärmespeicher der eingangs genannten Art auch eine im Crashfall günstige Befestigungsart vorzuschlagen.

Diese Aufgabe wird erfindungsgemäß durch die kennzeichnenden Merkmale des ersten Anspruchs gelöst.

Neben der Tatsache, daß der Fußraumbereich auf der Beifahrerseite im Crashfall nicht so starken Deformationen ausgesetzt ist wie der Fahrzeugvorbau, hat dieser Einbauort darüber hinaus den Vorteil, daß unabhängig vom Fahrzeugtyp im wesentlichen immer gleiche Einbauverhältnisse vorhanden sind, so daß man für eine Vielzahl von Fahrzeugen mit äußerst wenig unterschiedlichen Außenformen von Latentwärmespeichern zurechtkommt. Dadurch werden höhere Stückzahlen erreicht, so daß die stückzahlabhängigen Herstellungskosten sehr stark verringert werden können. Aufgrund des Vorsehens eines Spannbandes zur Befestigung des Latentwärmespeichers wird bei einer Deformation der Stirnwand in diesem Bereich erreicht, daß der Latentwärmespeicher dieser Deformation ausweichen kann, da er nicht mehr an mehreren Punkten mit der Stirnwand bzw. dem Bodenblech verbunden ist. Damit ist es auch möglich, daß die Zu- und Rücklaufleitung des Kühlmittels bei entsprechend vorgehaltener Länge das Ausweichen des Latentwärmespeichers mitmachen können, ohne zu reißen. Aufgrund der weiterhin vorgeschlagenen seitlichen Anbringung der beiden Leitungen können die im Fahrzeug verlaufenden Leitungen über eine Leitungskupplung mit dem Latentwärmespeicher verbunden werden , die so ausgelegt ist, daß die Leitungen zwar flüssigkeitsdicht verbunden sind, aber unter Kräften, wie sie im Crashfall freigesetzt werden, sich verdrehen können, ohne daß die Kupplung öffnet bzw. die Leitungen in der Kupplung abreißen. Damit wird sicher verhindert, daß sich heißes Kühlmittel im Crashfall im Beifahrerfußraum ergießt und so zu Verbrühungen/Verbrennungen der Füße/der Beine des Beifahrers führt.

Die Weiterbildung nach Anspruch 2 hat den Vorteil, daß der Latentwärmespeicher selbst direkt als Ablagefläche für die Füße des Beifahrers dienen kann. Selbstverständlich kann aus Sicherheitsgründen zwischen dem Außengehäuse des Latentwärmespeichers und dem üblicherweise vorhandenen Teppichboden im Fußraum noch eine Trittschutzplatte vorgesehen werden. Es ist aber auch möglich, den Teppichboden direkt auf die Außenseite des Latentwärmespeichergehäuses zu legen.

Die Ansprüche 3 und 4 beschreiben die sich als günstig erwiesenen Leitungsverläufe, wobei die Weiterbildung nach den Ansprüchen 5 und 6 noch den Vorteil hat, daß die zusätzlichen Schaltelemente, die zum Anschluß des Latentwärmespeichers an den Heizungskreislauf gemäß der EP-B 0 340 621 notwendig sind, vormontiert an der Rohkarosse angebracht werden können.

Im folgenden wird die Erfindung anhand eines bevorzugten Ausführungsbeispiels näher erläutert. Es stellen dar:
- Fig. 1: einen schematisierten Querschnitt durch einen beifahrerseitigen Fußraum;
- Fig. 2: eine schematisierte perspektivische Ansicht einer Fahrzeugstirnseite;
- Fig. 3: einen schematisierten Heizungskreislauf;
- Fig. 4: eine schematisierte Anordnung des Aggregateträgers.

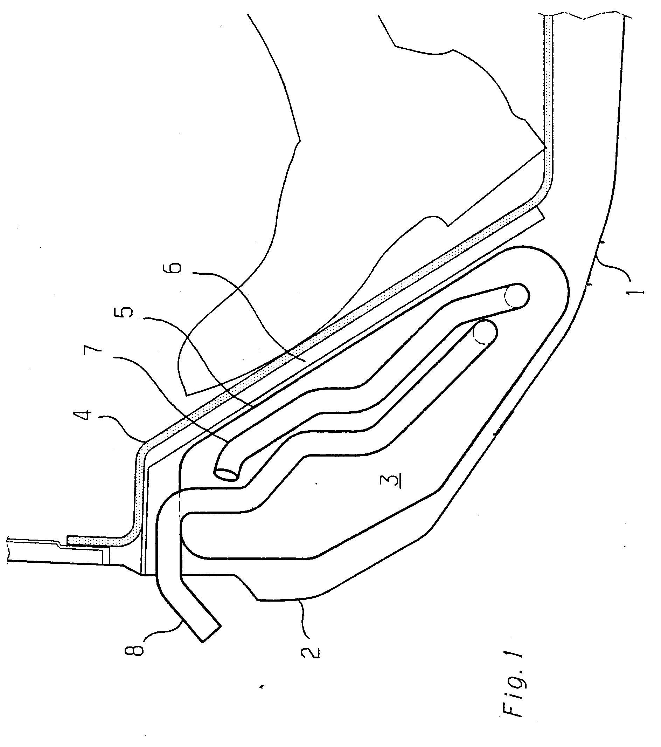

In Fig. 1 ist schematisiert ein Längsschnitt durch den vorderen Bereich des Fußraumes einer Kraftfahrzeugzelle gezeigt. Hier ist mit 1 das Bodenblech, mit 2 die Stirnwand, mit 3 ein Latentwärmespeicher und mit 4 ein Teppichboden bezeichnet. Die Stirnwand 2 verläuft in der Regel nicht senkrecht zum Bodenblech, sondern im Übergangsbereich schräg. Der vordere Fußraum folgt in der Regel nicht dem Verlauf der Stirnwand und des Bodenbleches, sondern wird unter einem Winkel von meist 45° als Fußstütze in diesem Bereich ausgestaltet. Die Abweichung zwischen dem Verlauf der Stirnwand bzw. des Bodenblechs und dem gewünschten Verlauf des Fußraumes in diesem Bereich wird entweder über einen Schaumstoffkeil oder über ein separates Abdeckblech erzielt, hinter dem dann ein Hohlraum gebildet wird.

Erfindungsgemäß wird anstelle des Schaumstoffkeils oder des Abdeckbleches der Latentwärmespeicher 3 untergebracht. Im Querschnitt weist er deshalb eine ebene Grundseite 5 auf, die eventuell unter Zwischenschaltung eines Trittschutzes 6 direkt mit dem Teppichboden 4 verkleidet ist. Die übrigen Seitenflächen des Latentwärmespeichers 3 sind dem Verlauf des Bodenblechs und der Stirnwand angepaßt. Damit ist es möglich, im Fußraum des Beifahrers Latentwärmespeicher mit einem Volumen von 10 - 13 l problemlos unterzubringen. Der für den Beifahrer vorhandene Fußraum wird dabei nur unwesentlich verringert.

Der Latentwärmespeicher 3 wird über eine Vorlaufleitung 7 und eine Rücklaufleitung 8 an den Heizungskreislauf angeschlossen. Die beiden Leitungen verlassen den Wärmespeicher auf seiner der Fahrzeuglängsachse zugewandten Seite.

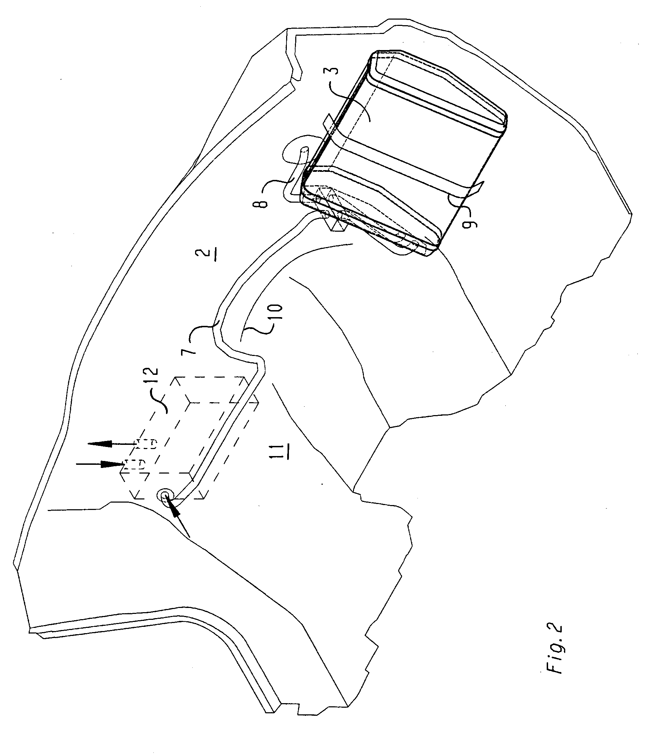

Zu Figur 2 ist eine perspektivische Ansicht eines vorderen PKW-Fußraumes dargestellt, aus der auch die Lage des Latentwärmespeichers 3 sowie der Verlauf der Vorlaufleitung 7 und der Rücklaufleitung 8 hervorgeht.

Gehalten wird der Latentwärmespeicher 3 im Fußraum durch ein mittig verlaufendes Spannband 9. Die Rücklaufleitung tritt kurz oberhalb des Latentwärmespeichers 3 durch einen Durchbruch in der Stirnwand in den Motorraum, wo hingegen die Vorlaufleitung 7 über den schematisiert angedeuteten Kardantunnel 10 herumgeführt ist und im fahrerseitigen Fußraum 11 die Stirnwand 2 durchstößt.

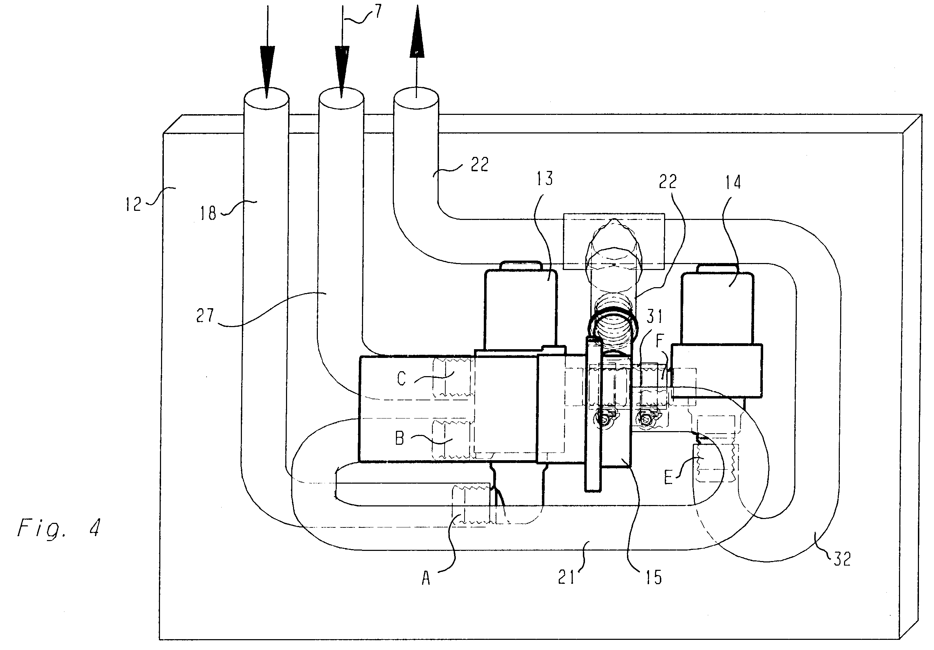

Auf der fahrerseitigen Vorderseite der Stirnwand 2 befindet sich das vordere linke Radhaus. Hier ist ein Aggregateträger 12 angeordnet, der zwei elektrisch ansteuerbare Schaltventile 13 und 14 sowie eine elektrisch antreibbare Umwälzpumpe 15 trägt. Mit diesem Aggregateträger 12 wird die Vorlaufleitung 7 verbunden (Fig. 4).

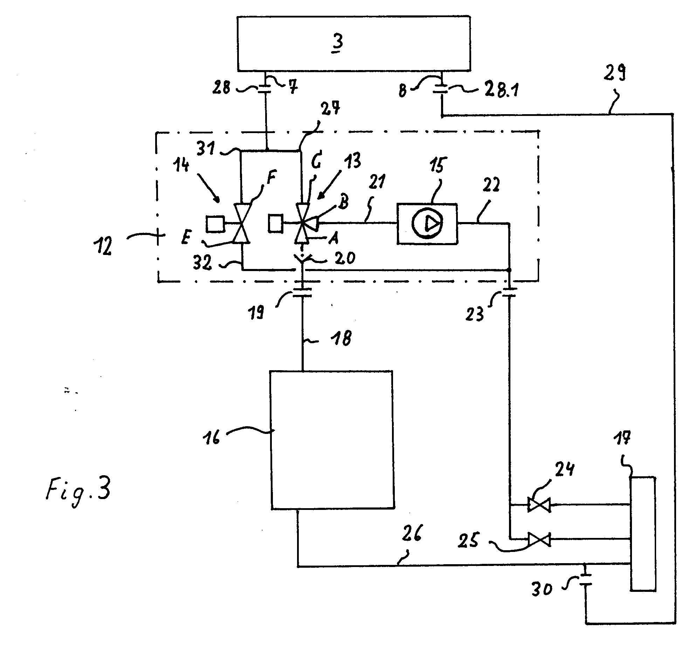

In Fig.3 ist schematisiert der Heizungskreislauf und die einzelnen Aggregate des Aggregateträgers 12 dargestellt.

Hierbei ist die die Wärme liefernde Brennkraftmaschine, mit 16 und der Heizungswärmetauscher für die Fahrgastzelle mit 17 bezeichnet.

Wie aus Fig. 3 und 4 ersichtlich, sind sämtliche Verbindungsleitungen zwischen den Ventilen 13 und 14 sowie der Umwälzpumpe 15 auf dem Aggregateträger 12 angeordnet.

Von der Brennkraftmaschine 16 führt eine Schlauchleitung 18 für in der Brennkraftmaschine erhitztes Kühlmittel unter Zwischenschaltung einer Schlauchkupplung 19 und eines Rückschlagventiles 20 zu dem Anschluß A des als 3-Wegeventils ausgebildeten Ventils 13. Selbstverständlich ist es möglich, das Rückschlagventil 20 auch in das Ventil 13 baulich zu integrieren. An dem Anschluß B dieses Ventils ist die Saugleitung 21 angeordnet, die zum Eingang der Umwälzpumpe 15 führt. Die Druckleitung 22 der Umwälzpumpe 15 führt unter Zwischenschaltung einer weiteren Schlauchkupplung 23 zu den beiden Heizungsventilen 24 und 25 und dann weiter zu dem Heizungswärmetauscher 17.

Von dem Heizungswärmetauscher 17 führt eine Rücklaufleitung 26 wieder zur Brennkraftmaschine 16 zurück.

An dem Anschluß C des Ventils 13 ist eine Leitung 27 angeschlossen, die unter Zwischenschaltung einer Schlauchkupplung 28 mit dem Latentwärmespeicher 3 über dessen Vorlaufleitung 7 verbunden ist. Über die Rücklaufleitung 8, eine weitere Schlauchkupplung 28.1 und eine Leitung 29 ist der Latentwärmespeicher 3 mit der Rücklaufleitung 26, ebenfalls unter Zwischenschaltung einer Schlauchkupplung 30 verbunden.

Das Ventil 14 ist als 2-Wegeventil aufgebaut. Es ist auf dem Aggregateträger 12 über eine Leitung 31 mit der Leitung 27 verbunden und andererseits über eine Bypass-Leitung 32 mit der Druckleitung 22. Die entsprechenden Ventilanschlüsse des Ventils 14 sind mit E und F bezeichnet.

Zur Heizung des Fahrgastinnenraumes bei stehender Brennkraftmaschine 16 und aufgeladenem Latentwärmespeicher 3 werden die Heizungsventile 24 und 25 geöffnet, das Ventil 14 geschlossen und das Ventil 13 vom Anschluß C zum Anschluß B durchgeschaltet. Der Anschluß A ist ebenfalls gesperrt.

Wenn bei diesen Ventilstellungen die Umwälzpumpe 15 eingeschaltet wird, so wird heißes Kühlmittel aus dem Latentwärmespeicher 3 über die Leitung 7 und 27, den Anschluß C, den Anschluß B und die Leitung 21 zur Umwälzpumpe 15 befördert. Von dort strömt es durch die Leitung 22 über die Heizungsventile 24 und 25 in den Heizungswärmetauscher 17, von dem die Wärme an den Fahrgastinnenraum in an sich bekannter Art und Weise abgegeben wird. Vom Heizungswärmetauscher gelangt das nunmehr abgekühlte Kühlmittel über die Leitung 26 und die Leitungen 29 und 8 zum Latentwärmespeicher 3 zurück, um dort wieder Wärme aufzunehmen.

Bei laufender Brennkraftmaschine und genügend heißem Kühlmittel innerhalb der Brennkraftmaschine übernimmt diese die Wärmelieferung für den Heizungswärmetauscher. Hierzu schaltet das Ventil 13 den Anschluß A zum Anschluß B. Damit kann in der Brennkraftmaschine erhitztes Kühlmittel über die Vorlaufleitung 18 und das Rückschlagventil 20 in die Leitung 21 und von dort zur Umwälzpumpe 15 strömen. Es verläßt die Umwälzpumpe 15 über die Leitung 22 und gelangt über die Heizungsventile 24 und 25 zum Wärmetauscher 17. Von dort strömt es über die Rücklaufleitung 26 zur Brennkraftmaschine 16 zurück.

Sobald von dem Kühlmittel der Brennkraftmaschine mehr Wärme dem Heizungswärmetauscher angeliefert wird als zur Aufrechterhaltung der Temperatur in der Fahrgastzelle notwendig ist, wird das Ventil 14 geöffnet. Dadurch kann erhitztes Kühlmittel durch die Bypass-Leitung 32, den Anschluß E und den Anschluß F des Ventils 14 zur Leitung 31 fließen und von dort weiter über die Leitung 27 und die Vorlaufleitung 7 zum Latentwärmespeicher 3. Dort wird die abgekühlte Speichermasse von dem heißen Kühlmittel erwärmt. Das in dem Latentwärmespeicher abgekühlte Kühlmittel verläßt ihn über die Rücklaufleitungen 8 und 29 und gelangt über die Rücklaufleitung 26 zur Brennkraftmaschine 1.

Der zur Steuerung der Ventile und der Umwälzpumpe notwendige elektrische/elektronische Regelkreis ist hier nicht näher beschrieben, da sein spezieller Aufbau nicht Gegenstand der Erfindung ist.

Fig. 4 zeigt schematisiert eine konkrete bauliche Anordnung der einzelnen Aggregate auf dem Aggregateträger 12 sowie der Leitungen, die einerseits die Aggregate untereinander und andererseits die Aggregate mit dem Heizungskreislauf verbinden. Hierbei sind gleiche Bauteile mit gleichen Bezugsziffern wie in Fig. 3 bezeichnet. Wie aus dieser Abbildung ersichtlich ist, kann ein sehr kompakter Aufbau erzielt werden mit relativ kurzen Leitungsverbindungen.

Bei der gezeigten Anordnung liegt die Umwälzpumpe 15 vor dem Ventil 13, das dadurch teilweise verdeckt wird. Benachbart zum Ventil 13 ist das Ventil 14 angeordnet. Die Leitung 31 mündet hier direkt in dem Ventil 13, das so aufgebaut ist, daß ein direkter Durchfluß zur Leitung 27 gewährleistet ist. Selbstverständlich ist auch noch das Rückschlagventil 20 in dem Ventil 13 integriert.

Weiterhin ist es möglich, die elektrischen Anschlüsse für die beiden Ventile und die Umwälzpumpe ebenfalls zusammenzufassen zu einem Zentralstecker, so daß neben den drei Leitungsanschlüssen für das Kühlmittel nur noch ein weiterer Zentralstecker mit dem Aggregateträger 12 verbunden werden muß, um alle betriebsnotwendigen Anschlüsse herzustellen.

## Patentansprüche

1. Fahrzeugheizung für ein mit einer flüssigkeitsgekühlten Brennkraftmaschine (16) ausgerüstetes Fahrzeug, bestehend aus einem Heizungskreislauf mit einem in einer Fahrgastzelle angeordneten flüssigkeitsdurchströmten Wärmetauscher (17), der über eine Zulaufleitung und eine Rücklaufleitung mit dem Kühlkreis einer Brennkraftmaschine (16) verbunden ist und mit einem Latentwärmespeicher (3), der in den Heizungskreis einschaltbar ist, wobei der Flüssigkeitsumlauf durch den Wärmetauscher (17) und den Latentwärmespeicher (3) über eine motorunabhängig antreibbare Umwälzpumpe (15) und Umschaltventile (13,14) geschieht,
dadurch gekennzeichnet, daß der Latentwärmespeicher (3) in der Fahrgastzelle im Bereich des Fußraumes des Beifahrers eingebaut ist, über ein Spannband (9) in seiner Lage gehalten ist und daß die Vorlaufleitung (7) und die Rücklaufleitung (8) für das Kühlmittel seitlich am Latentwärmespeicher (3) über Kupplungen angeordnet sind.

2. Fahrzeugheizung nach Anspruch 1,
dadurch gekennzeichnt, daß der Latentwärmespeicher (3) eine dem Fußraum der Kraftfahrzeugzelle zugewandte ebene Grundseite (5) aufweist und daß die übrigen Seitenflächen dem Verlauf der Stirnwand (2) und des Bodenblechs (1) der Fahrgastzelle angepaßt sind.

3. Fahrzeugheizung nach einem der vorangegangenen Ansprüche,
dadurch gekennzeichnet, daß die Rücklaufleitung (8) im Bereich des Latentwärmespeichers durch die Stirnwand (2) direkt in den Motorraum geführt ist.

4. Fahrzeugheizung nach einem der vorangegangenen Ansprüche,
dadurch gekennzeichnet, daß die Vorlaufleitung (7) in der Fahrgastzelle auf die Fahrerseite hinübergeführt ist und dort durch eine öffnung in der Stirnwand (2) austritt.

5. Fahrzeugheizung nach einem der vorangegangenen Ansprüche,
dadurch gekennzeichnet, daß die Vorlaufleitung (7) in das Radhaus auf der Fahrerseite austritt und dort mit einem Aggregateträger (12) verbunden ist, auf dem zwei Steuerventile (13, 14) und eine Umwälzpumpe (15) angeordnet ist.

6. Fahrzeugheizung nach einem der vorangegangenen Ansprüche,
dadurch gekennzeichnet, daß der Aggregateträger (12) an die Karosserie im Bereich des Radhauses eingeklipst ist.

## Claims

1. Vehicle heating for a vehicle equipped with a liquid-cooled combustion engine (16), comprising a heating circuit with a heat exchanger (17) through which liquid flows, arranged in the passenger compartment, which is connected to the cooling circuit of a combustion engine (16) via a supply line and a return line and with a latent heat store (3), which can be switched into the heating circuit, whereby the liquid circulation takes place through the heat exchanger (17) and the latent heat store (3) via a circulating pump (15), which can be driven independently of the motor, and change-over valves (13, 14),
characterised in that the latent heat store (3) is installed in the passenger compartment in the area of the foot well of the front passenger, is retained in its position by means of a clamping band (9) and that the supply line (7) and the return line (8) for the cooling medium are arranged at the side of the latent heat store (3) via couplers.

2. Vehicle heating according to Claim 1,
characterised in that the latent heat store (3) has a flat side (5) towards the foot well of the motor vehicle compartment and that the other side surfaces are matched to the course of the front wall (2) and of the floor panel (1) of the passenger compartment.

3. Vehicle heating in accordance with one of the foregoing Claims,
characterised in that the return line (8) is taken directly into the motor space through the front wall (2) in the region of the latent heat store (3).

4. Vehicle heating in accordance with one of the foregoing Claims,
characterised in that the supply line (7) is taken, in the passenger compartment to the driver's side and there emerges through an opening in the front wall (2).

5. Vehicle heating in accordance with one of the foregoing Claims,
characterised in that the supply line (7) emerges into the wheel arch on the driver's side and there is connected to an assembly carrier (12), on which two control valves (13, 14) and a circulating pump (15) are arranged.

6. Vehicle heating in accordance with one of the foregoing Claims,
characterised in that the assembly carrier (12), is clipped onto the bodywork in the region of the wheel arch.

## Revendications

1. Chauffage d'un véhicule équipé d'un moteur à combustion interne (16) refroidi par un liquide, dans lequel :
- un circuit de chauffage comprend un échangeur de chaleur (17) à circulation de liquide, disposé dans l'habitacle et relié par une conduite d'amenée et une conduite de retour au circuit de refroidissement du moteur (16),
- un accumulateur de chaleur latente (3) peut être connecté au circuit de chauffage, le passage du liquide de ce circuit à travers l'échangeur de chaleur (17) et l'accumulateur de chaleur latente (3) étant assuré par une pompe de circulation (15) que peut entraîner un moteur, et par des soupapes de commutation (13, 14),
caractérisé en ce que
l'accumulateur (3) est incorporé à l'habitacle du véhicule au niveau de l'espace où se trouvent les pieds du passager, il est maintenu en position par une bande de serrage (9) tandis que les conduites d'amenée (7) et de retour (8) du liquide de refroidissement sont montées sur le côté de l'accumulateur (3) par des accouplements.

2. Chauffage selon la revendication 1,
caractérisé en ce que
l'accumulateur de chaleur latente (3) comporte une paroi principale (5), plane, faisant face au logement des pieds dans l'habitacle, les autres surfaces latérales de l'accumulateur étant adaptées aux tracés du tablier avant (2) et de la tôle de plancher (1) de l'habitacle.

3. Chauffage selon l'une des revendications précédentes,
caractérisé en ce que
la conduite de retour (8) pénètre directement dans le compartiment moteur, en traversant le tablier (2) au niveau de l'accumulateur de chaleur latente.

4. Chauffage selon l'une des revendications précédentes,
caractérisé en ce que
la conduite d'amenée (7) passe dans l'habitacle du côté du conducteur et sort de là à travers une ouverture du tablier (2).

5. Chauffage selon l'une des revendications précédentes,
caractérisé en ce que
la conduite d'amenée (7) sort, du côté du conducteur, dans le passage de roue et est reliée à cet endroit à un boîtier de système (12) comportant deux soupapes de commande (13, 14) et une pompe de circulation (15).

6. Chauffage selon l'une des revendications précédentes,
caractérisé en ce que
le boîtier de système (12) est clipsé sur la carrosserie, au niveau du passage de roue.
